(19) Europäisches Patentamt
European Patent Office
Office européen des brevets

(11) EP 4 345 136 B1

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **22198823.1**

(22) Anmeldetag: **29.09.2022**

(51) Internationale Patentklassifikation (IPC):
***C08L 67/00*** *(2006.01)* ***C08K 5/49*** *(2006.01)*
***C08L 51/00*** *(2006.01)*

(52) Gemeinsame Patentklassifikation (CPC):
(C-Sets verfügbar)
**C08L 69/00; H01B 7/295** (Forts.)

# (54) E/E-BAUTEIL ENTHALTEND POLYCARBONAT-MATERIAL MIT HOHER KRIECHSTROMFESTIGKEIT

ELECTRONIC COMPONENT CONTAINING POLYCARBONATE MATERIAL WITH HIGH TRACK RESISTANCE

COMPOSANT E/E COMPRENANT UN MATÉRIAU POLYCARBONATE PRÉSENTANT UNE RÉSISTANCE ÉLEVÉE AU FLUAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.04.2024 Patentblatt 2024/14**

(73) Patentinhaber: **Covestro Deutschland AG**
**51373 Leverkusen (DE)**

(72) Erfinder:
- **Nolte, Marius**
  **51065 Köln (DE)**
- **Knaupp, Matthias**
  **40764 Langenfeld (DE)**
- **Hungerland, Tim**
  **51061 Köln (DE)**
- **Morick, Joachim**
  **51371 Leverkusen (DE)**
- **Schwecke, Constantin**
  **53347 Alfter (DE)**

(74) Vertreter: **Levpat**
**c/o Covestro AG**
**Gebäude K12**
**51365 Leverkusen (DE)**

(56) Entgegenhaltungen:
**US-A1- 2018 187 003**

EP 4 345 136 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 69/00, C08L 51/04, C08K 5/523;**
**C08L 69/00, C08L 55/02, C08K 5/523**

## Beschreibung

Die vorliegende Erfindung betrifft ein E/E-Bauteil enthaltend eine flammgeschützte Polycarbonat-Zusammensetzung mit hoher Kriechstromfestigkeit sowie die Verwendung einer bestimmten Kombination aus kautschukmodifiziertem Pfropfpolymerisat und eines Flammschutzmittels zur Verbesserung von Kriechstromfestigkeit und Flammwidrigkeit von Polycarbonat-Zusammensetzungen.

Polycarbonat-Zusammensetzungen wie auch Polycarbonat-Blends werden für eine Vielzahl von Anwendungen im Bereich Automobil, im Bausektor und im Elektrik/Elektronik-Bereich (E/E) eingesetzt.

Für Anwendungen aus dem Bereich der Elektrik/Elektronik (E/E) sind gute Isolationseigenschaften sowie eine hohe Flammwidrigkeit von hoher Sicherheitsrelevanz. Solche Anforderungen nehmen z.B. auch im Bereich der Elektromobilität immer mehr an Bedeutung zu. Wenn das thermoplastische Material (d.h. das Polymermaterial) in direkten Kontakt zu stromführenden Teilen wie Leiterbahnen steht, so ist weiterhin eine hohe Kriechstromfestigkeit wichtig. Durch Kriechströme kann ansonsten über die Kunststoffoberfläche eine Ladungsübertragung über weitere Strecken erfolgen, als es bei gleicher Spannung direkt durch die Luft möglich wäre. Das ist selbst bei Materialien der Fall, die eigentlich hohe Isolationseigenschaften aufweisen wie Kunststoffe. Die Neigung zur Kriechstrombildung sollte also möglichst gering sein, um die Gefahr von Kurzschlüssen zu reduzieren und um damit Brände zu vermeiden. Außerdem ermöglicht eine hohe Kriechstromfestigkeit, die Abstände zwischen z.B. elektrischen Leiterbahnen zu reduzieren und damit kleinere Bauteilgrößen zu erreichen oder die Bauteile mit höheren Betriebsspannungen zu betreiben.

Ein Maß für die Kriechstromfestigkeit eines Kunststoffs ist der CTI ("comparative tracking index"). Damit lässt sich ausdrücken, inwieweit die Kunststoffoberfläche durch den Einfluss von Schmutz oder Flüssigkeit beim Anlegen einer elektrischen Spannung die Ausbildung von Kriechströmen ermöglicht. Je höher die Kriechstromfestigkeit, desto besser eignet sich das Material für Bauteile, an denen hohe Spannungen anliegen und/oder die im Einsatz verschmutzen oder mit Feuchtigkeit in Berührung kommen können. Der CTI wird in Volt angegeben und sagt aus, dass bis zu dieser Spannung bei Auftropfen einer bestimmten Menge einer Elektrolytlösung kein deutlicher Kriechstrom auftritt.

Eine alternative Bestimmungsmethode zur Messung der Kriechstromfestigkeit ist der im Beispielteil beschriebene PTI ("Proof Tracking Index"). Diese Methode kann insbesondere zur Charakterisierung von Bauteilen herangezogen werden, um die Kriechstromfestigkeit des Bauteils gegenüber als kritisch bekannten Spannungsbereichen zu testen.

Polycarbonat weist im Vergleich zu anderen Polymeren wie beispielsweise Polyethylen nur eine geringe Kriechstromfestigkeit mit einem CTI Wert von etwa 250 V auf. Für manche Hochspannungsanwendungen wie im Bereich der Elektromobilität werden aber CTI Werte von 600 V gefordert. Weiterhin sollen die Materialien für solche Anwendungen eine sehr hohe Flammwidrigkeit nach UL 94 V aufweisen, bevorzugt eine Klassifizierung von VO bei dünnen Wandstärken wie 1,5 mm.

Die Flammwidrigkeit von Polycarbonat und Polycarbonat-Blends wird üblicherweise durch die Zugabe von Flammschutzmitteln verbessert. Allerdings erhöhen manche Flammschutzmittel die Neigung zur Kriechstrombildung, führen also zu einer unerwünschten Absenkung des CTI. Weiterhin werden durch Flammschutzmittel häufig auch die Wärmeformbeständigkeit und die Zähigkeit wie z.B. die Schlagzähigkeit negativ beeinflusst.

Aus den genannten Gründen sind E/E-Bauteile aus Polycarbonat-Zusammensetzungen als thermoplastischem Material schwer zu realisieren. Es gibt zwar grundsätzlich die Möglichkeit, die Abstände zwischen den Leiterbahnen soweit zu erhöhen, dass die Gefahr von Kurzschlüssen und Bränden durch Kriechströme weitestgehend ausgeschlossen wird. Wie oben erwähnt, läuft ein solcher Ansatz aber dem Bestreben zuwider, möglichst kleine Bauteile herzustellen und in den entsprechenden Anwendungen einzusetzen.

In einigen Veröffentlichungen wurden daher Ansätze beschrieben, Polycarbonat-Zusammensetzungen mit verbessertem CTI bereitzustellen.

EP 3560997 A2 offenbart eine thermoplastische Harzzusammensetzung mit guten Eigenschaften wie hohem CTI umfassend: (A) 100 Gewichtsteile Polycarbonat; (B) 2 Gewichtsteile bis 6 Gewichtsteile eines flammhemmenden Mittels aus einer zyklischen Phosphazenverbindung; (C) 0,1 Gewichtsteile bis 5 Gewichtsteile eines Schlagzähmodifikators; und (D) 1 Gewichtsteil bis 3 Gewichtsteile eines fluorierten Polyolefins.

US 2012/0248384 A1 offenbart Polycarbonatzusammensetzungen, Verfahren und Herstellungsartikel, die zumindest bestimmte Anforderungen an die elektrische Kriechstromfestigkeit erfüllen. Die Zusammensetzungen, Verfahren und Herstellungsartikel, die diese Anforderungen erfüllen, enthalten mindestens ein Polycarbonat, ein Polysiloxanblock-Copolycarbonat und ein Übergangsmetalloxid, z.B. Titandioxid.

US2018/187003A1 offenbart ein thermoplastisches Material umfassend aromatisches Polycarbonat, kautschukmodifiziertes Pfropfcopolymer und phosphorhaltiges Flammschutzmittel.

Die Zusammenhänge zwischen Brandverhalten (GWFI) und Kriechstromfestigkeit werden in der Veröffentlichung: "Glow wire ignition temperature (GWIT) and comparative tracking index (CTI) of glass fibre filled engineering polymers, blends and flame retarded formulations" (Polymer Degradation and Stability, Volume 96, Issue 12, Dezember 2011, Seiten 2098-2103) behandelt.

Da die Bereitstellung von E/E-Bauteilen mit den notwendigen Flammschutzeigenschaften und hohem CTI aus Polycarbonat-Zusammensetzungen schwierig ist, werden oftmals andere thermoplastische Materialien wie Polyester oder Polyamide für solche Anwendungen eingesetzt. Allerdings bieten Polycarbonat- und Polycarbonat-Blend-Zusammensetzungen eine interessante Eigenschaftskombination aus hoher Wärmeformbeständigkeit und hoher Zähigkeit und daher war es wünschenswert E/E-Bauteile umfassend ein thermoplastisches Material mit solchen Eigenschaften bereitzustellen, ohne die Abstände der elektrischen Leiter in unerwünschter Weise zu vergrößern.

Es war insbesondere wünschenswert, ein E/E-Bauteil bereitzustellen umfassend ein thermoplastisches Material, das sich durch die Kombination von hohem CTI, hoher Flammwidrigkeit, hoher Wärmeformbeständigkeit und Schlagzähigkeit auszeichnet. Insbesondere war es wünschenswert, dass das thermoplastische Material, bevorzugt aus einer Polycarbonat-Zusammensetzung, einen CTI von mindestens 400 V, bevorzugt 600 V, vorzugsweise bestimmt nach der im Beispielteil beschriebenen Schnellprüfmethode in Anlehnung an IEC 60112:2009, einen PTI von 300 V und 350 V, vorzugsweise bestimmt nach der im Beispielteil beschriebenen Schnellprüfmethode in Anlehnung an IEC 60112:2009, eine UL 94 Klassifizierung von mindestens V2 bei 1,5 mm, eine Vicat Erweichungstemperatur gemessen nach DIN ISO 306 (Version von 2013, Verfahren B/120) von mindestens 105 °C und eine Izod Kerbschlagzähigkeit von mindestens 40 kJ/m2 nach ISO 180-1A (Version von 2019) aufweist.

Überraschend wurde gefunden, dass ein E/E-Bauteil umfassend einen ersten elektrischen Leiter L1 und einen zweiten elektrischen Leiter L2 in einem ersten Abstand d1 und einem zweiten Abstand d2 zueinander,

welche über ein thermoplastisches Material M, das in direktem Kontakt mit dem ersten elektrischen Leiter und der zweiten elektrischen Leiter steht, verbunden sind,
wobei der Abstand d1 die kürzeste Strecke zwischen dem ersten elektrischen Leiter und dem zweiten elektrischen Leiter entlang der Oberfläche des thermoplastischen Materials M ist und
wobei der Abstand d2 die kürzeste Strecke zwischen dem ersten elektrischen Leiter und dem zweiten elektrischen Leiter durch die Luft ist
wobei d2 so ausgewählt ist, dass bei der jeweiligen Betriebsspannung U für das Bauteil ein Überschlag durch die Luft verhindert wird,
wobei d1 bei der nachfolgend aufgelisteten Betriebsspannung U folgende Werte hat:

$$d1(0V \leq U \leq 250V)\text{: 1,3 mm bis} < 2{,}5 \text{ mm}$$

$$d1(250\ V < U \leq 500\ V)\text{: 2,5 mm bis} < 5{,}0 \text{ mm}$$

$$d1(500\ V < U \leq 1000\ V) = 5{,}0 \text{ mm bis} < 10{,}0 \text{ mm}$$

und wobei das thermoplastische Material M folgende Komponenten umfasst:

A) mindestens ein aromatisches Polycarbonat, aromatischen Polyestercarbonats oder Mischungen daraus,
B) mindestens 5 Gew.-% mindestens eines kautschukmodifizierten Pfropfpolymers mit einer Pfropfgrundlage ausgewählt aus der Gruppe bestehend aus Acrylatkautschuken, Polybutadienkautschuken und Styrol-Butadien-Blockcopolymer-Kautschuken und einer Pfropfauflage, die frei ist von Struktureinheiten abgeleitet von Acrylnitril
C) mindestens 5 Gew.-% mindestens eines phosphorhaltiges Flammschutzmittels.

die gewünschten Eigenschaften aufweist.

Die Komponenten A, B und C sowie optional D bilden also die Zusammensetzung des thermoplastischen Materials M.

Bevorzugt umfasst das thermoplastische Material M (also die Zusammensetzung) 50 bis 85 Gew.-%, weiter bevorzugt 65 bis 80 Gew.-% der Komponente A, 5 bis 15 Gew.-%, weiter bevorzugt 6 bis 12 Gew.-% der Komponente B und 5 bis 15 Gew.-%, weiter bevorzugt 6 bis 12 Gew.-% der Komponente C.

In einer bevorzugten Ausführungsform beträgt das Gewichtsverhältnis der Komponenten B zu C 0,8:1 bis 1,2:1.

Die Zusammensetzung kann zusätzlich zu den Komponenten A, B und C als Komponente D ein oder mehrere Polymeradditive, Füll- und Verstärkungsstoffe, Farbstoffe, Pigmente und/oder von den Komponenten A und B verschiedene Polymere als Blendpartner enthalten, wobei die Menge der Komponente D bevorzugt 0,1 bis 20 Gew.-%, weiter bevorzugt 0,2 bis 15 Gew.-% beträgt.

Die Anteile der Komponenten A bis D beziehen sich jeweils auf die gesamte Zusammensetzung.

Bevorzugt besteht die Zusammensetzung zu mindestens 90 Gew.-%, weiter bevorzugt zu mindestens 95 Gew.-% aus den Komponenten A bis D. Besonders bevorzugt besteht die Zusammensetzung nur aus den Komponenten A bis

D.

Der Leiterabstand d1 hängt also von der Betriebsspannung ab und beträgt beispielweise im Bereich von 0 bis einschließlich 250 V 1,3 bis weniger als 2,5 mm.

Die genannten Untergrenzen der Leiterabstände sind nur realisierbar, wenn das thermoplastische Material einen CTI von 600 V aufweist. Für die genannten Obergrenzen ist ein CTI von mindestens 400 V erforderlich. Wenn das thermoplastische Material einen CTI von 600 V aufweist, sind die Abstände d1 bevorzugt wie folgt

$$d1(0V \leq U \leq 250V)\text{: } 1{,}3 \text{ bis } < 1{,}8 \text{ mm}$$

$$d1(250\text{ V} < U \leq 500\text{ V})\text{: } 2{,}5 \text{ bis } < 3{,}6 \text{ mm}$$

$$d1(500\text{ V} < U \leq 1000\text{ V})\text{: } 5{,}0 \text{ bis } < 7{,}1 \text{ mm}$$

Bevorzugt ist bei dem erfindungsgemäßen E/E-Bauteil d2 mindestens 1,2 mm, weiter bevorzugt 1,2 bis 10,0 mm. Die Bestimmung des Abstandes, mit dem ein Überschlag durch die Luft verhindert wird, liegt in der Fähigkeit des Fachmanns.

Bevorzugt handelt es sich bei dem E/E-Bauteil um eines, das nach ISO 20653:2013-02 eine Schutzart von IP6K9K, d.h. eine Abschirmung gegen Berührung, Eindringen von Fremdkörpern und Wasser aufweist.

Das erfindungsgemäße E/E-Bauteil ist bevorzugt ein Teil eines (Hoch-)Spannungsschalters oder (Hoch-) Spannungswechselrichters, Relais, elektronischen Verbinders, elektrischen Verbinders, Schutzschalters, einer Photovoltaikanlage, eines elektrischen Motors, eines Kühlkörpers, eines USB-Steckers, eines Ladegerätes oder Ladesteckers für elektrische Fahrzeuge, eines Elektroanschlusskastens, eines Smart Meter Gehäuses, eines Miniaturtrennschalters oder einer Stromsammelschiene. "Teil eines" bedeutet hierbei, dass es sich um ein Einzelelement eines komplexen Erzeugnisses, einer Bauteilgruppe, handeln kann, dass es aber ebenso das gesamte Element, wie z.B. bei dem Fall "elektronischer Verbinder" denkbar, sein kann

Ein weiterer Gegenstand der vorliegenden Erfindung ist auch eine Baugruppe, die für eine Betriebsspannung von mindestens 400 V, bevorzugt von 600 V, ausgelegt ist enthaltend das erfindungsgemäße E/E-Bauteil, bevorzugt eine solche Baugruppe, die nach ISO 20653:2013-02 eine Schutzart von IP6K9K aufweist,

Ein weiterer Gegenstand der vorliegenden Erfindung ist die Verwendung von 5 bis 15 Gew.-% eines kautschukmodifizierten Pfropfpolymers mit einer Pfropfgrundlage ausgewählt aus der Gruppe bestehend aus Acrylatkautschuken, Polybutadienkautschuken und Styrol-Butadien-Blockcopolymer-Kautschuken und einer Pfropfauflage, die frei ist von Struktureinheiten abgeleitet von Acrylnitril sowie und 5 bis 15 Gew.-% mindestens eines phosphorhaltiges Flammschutzmittels zur Verbesserung des CTI und der Flammwidrigkeit nach UL 94 V von aromatischen Polycarbonat-Zusammensetzungen oder aromatischen Polyestercarbonat-Zusammensetzungen.

Bevorzugt ist dabei eine Verwendung, wobei ein CTI von 600 V bestimmt nach der Schnellprüfmethode in Anlehnung an IEC 60112:2009 sowie eine UL 94 V Klassifizierung bei einer Probenkörperdicke von 1,5 mm von mindestens V2 von Polycarbonat-Zusammensetzungen enthaltend 50 bis 85 Gew.-% aromatisches Polycarbonat oder aromatisches Polyestercarbonat erzielt wird.

Die als bevorzugt, besonders bevorzugt etc. für die Zusammensetzung des thermoplastischen Materials genannten Merkmale gelten auch im Hinblick auf die erfindungsgemäße Verwendung

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (1)

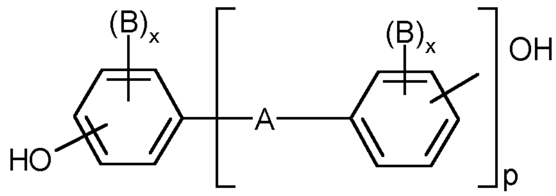

(1),

wobei

A eine Einfachbindung, $C_1$ bis $C_5$-Alkylen, $C_2$ bis $C_5$-Alkyliden, $C_5$ bis $C_6$-Cycloalkyliden, -O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (2) oder (3)

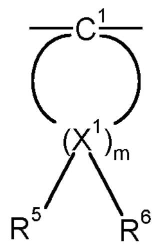

(2)

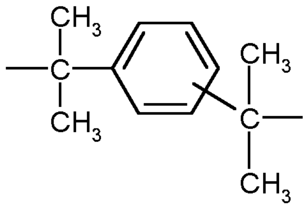

(3)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel $M_w$) von bevorzugt 20000 bis 40000 g/mol, weiter bevorzugt 22000 bis 32000 g/mol, besonders bevorzugt 24000 bis 30000 g/mol. gemessen durch GPC (Gelpermeationschromatographie) kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Durch die bevorzugten Bereiche wird in den erfindungsgemäßen Zusammensetzungen eine besonders vorteilhafte Balance aus mechanischen und rheologischen Eigenschaften erreicht.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen

Gemisch eingesetzt werden.

Bevorzugt wird als Komponente A lineares Polycarbonat, weiter bevorzugt auf Basis von ausschließlich Bisphenol A eingesetzt.

**Komponente B**

Bei der Komponente B handelt es sich um mindestens ein kautschukhaltige Pfropfpolymerisate von,

B.1) 5 bis 95 Gew.-%, vorzugsweise 10 bis 70 Gew.-%, besonders bevorzugt 20 bis 60 Gew.-%, bezogen auf die Komponente B, einer Mischung aus

B.1.1) 65 bis 85 Gew.-%, bevorzugt 70 bis 80 Gew.-%, bezogen auf B.1, mindestens eines Monomeren ausgewählt aus der Gruppe der Vinylaromaten (wie beispielsweise Styrol, $\alpha$-Methylstyrol), kernsubstituierten Vinylaromaten (wie beispielsweise p-Methylstyrol, p-Chlorstyrol) und Methacrylsäure-(C1-C8)-Alkylester (wie beispielsweise Methylmethacrylat, Ethylmethacrylat)
und

B.1.2) 15 bis 35 Gew.-%, bevorzugt 20 bis 30 Gew.-%, bezogen auf B.1, mindestens eines Monomeren ausgewählt aus der Gruppe der (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)
auf

B.2) 95 bis 5 Gew.-%, vorzugsweise 90 bis 30 Gew.-%, besonders bevorzugt 80 bis 40 Gew.-%, bezogen auf die Komponente B, einer oder mehrerer kautschukelastischer (elastomerer) Pfropfgrundlagen ausgewählt aus der Gruppe bestehend aus Acrylatkautschuk und Dienkautschuk Die Pfropfgrundlage hat bevorzugt eine Glasübergangstemperatur < 0°C, weiter bevorzugt < -20°C, besonders bevorzugt <-40°C.

Die Komponente B.1 wird auch als Pfropfauflage oder Pfropfhülle bezeichnet und ist frei von Acrylnitril.

Die Glasübergangstemperatur wird, sofern in der vorliegenden Anmeldung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die Pfropfpartikel in der Komponente B1 weisen bevorzugt eine mittlere Teilchengröße (D50-Wert) von 0,05 bis 5 $\mu$m, vorzugsweise von 0,1 bis 1,0 $\mu$m, besonders bevorzugt von 0,2 bis 0,5 $\mu$m auf.

Die mittlere Teilchengröße D50 ist der Durchmesser, oberhalb und unterhalb dessen jeweils 50 Gew.-% der Teilchen liegen. Sie wird, soweit in der vorliegenden Anmeldung nicht explizit anders angegeben, mittels Ultrazentrifugenmessung (W. Scholtan, H. Lange, Kolloid, Z. und Z. Polymere 250 (1972), 782-1796) bestimmt.

Bevorzugte Dienkautschuke als Pfropfgrundlagen B.2, sind solche enthaltend Butadien oder Copolymerisate aus Dienen, bevorzugt enthaltend Butadien, und weiteren copolymerisierbaren Vinyl-Monomeren (z.B. gemäß B.1.1 und B.1.2) oder Gemische aus einer oder mehrerer der zuvor genannten Komponenten.

Weiter bevorzugt ist als Dinekautschuk reiner Polybutadienkautschuk. In einer weiteren bevorzugten Ausführungsform handelt es sich bei B.2 um Styrol-Butadien- Kautschuk, besonders bevorzugt um Styrol-Butadien-Blockcopolymer-Kautschuk.

Bevorzugte Monomere B.1.1 sind ausgewählt aus mindestens einem der Monomere Styrol, $\alpha$-Methylstyrol und Methylmethacrylat, bevorzugte Monomere B.1.2 sind ausgewählt aus mindestens einem der Monomere Maleinsäureanhydrid und Methylmethacrylat.

Besonders bevorzugte Monomere sind B.1.1 Styrol und B.1.2 Methylmethacrylat. Genauso bevorzugt ist sowohl B.1.1 als auch B.1.2 Methylmethacrylat.

Unter den Pfropfcopolymeren mit Dienkautschuken als Pfropfgrundlage bevorzugt sind Pfropfcopolymere, bei denen Methylmethacrylat oder eine Mischung von Methylmethacrylat und Styrol auf eine Pfropfgrundlage auf 1,3-Butadienbasis oder auf eine Pfropfgrundlage aus einer Mischung aus 1,3-Butadien und Styrol aufgepfropft werden, die auch als MBS-(Methylmethacrylat-Butadien-Styrol)-Kautschuke bezeichnet werden.

Für die Pfropfpolymerisate B geeignete elastomere Acrylatkautschuk-Pfropfgrundlagen B.2 sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert

werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Der Gelanteil der Pfropfpolymerisate beträgt mindestens 40 Gew.-%, bevorzugt mindestens 60 Gew.-%, besonders bevorzugt mindestens 75 Gew.-% (gemessen in Aceton).

Der Gelgehalt der Pfropfpolymerisate wird, soweit in der vorliegenden Erfindung nicht anders angegeben, bei 25°C als in Aceton als Lösungsmittel unlöslicher Anteil bestimmt (M. Hoffmann, H. Krömer, R. Kuhn, Polymeranalytik I und II, Georg Thieme-Verlag, Stuttgart 1977).

Die Pfropfpolymerisate B werden in der Regel durch radikalische Polymerisation hergestellt.

Besonders bevorzugte Polymerisate B sind z.B. solche in Emulsionspolymerisation hergestellte Polymerisate, wie sie z. B. in Ullmann, Enzyklopädie der Technischen Chemie, Bd. 19 (1980), S. 280 ff. beschrieben sind.

Nach Abschluss der Polymerisationsreaktion erfolgt eine Ausfällung der Pfropfpolymerisate aus der wässrigen Phase, gefolgt von einer optionalen Wäsche mit Wasser. Den letzten Aufarbeitungsschritt bildet eine Trocknung.

Das Pfropfpolymerisat B umfasst herstellungsbedingt im Allgemeinen auch freies, d.h. nicht chemisch an die Kautschukgrundlage gebundenes Copolymerisat aus B.1.1 und B.1.2, welches sich dadurch auszeichnet, dass es in geeigneten Lösungsmitteln (z.B. Aceton) gelöst werden kann.

Bevorzugt enthält die Komponente B1 ein freies Copolymerisat aus B.1.1 und B.1.2, welches ein gewichtsgemitteltes Molekulargewicht (Mw), bestimmt per Gelpermeationschromatographie mit Polystyrol als Standard, von bevorzugt 30000 bis 200000 g/mol, besonders bevorzugt von 40000 bis 150000 g/mol aufweist.

Komponente C

Als Komponente C wird in der erfindungsgemäßen Zusammensetzung ein phosphorhaltiges Flammschutzmittel eingesetzt, bevorzugt ausgewählt aus den Gruppen der mono- und oligomeren Phosphor- und Phosphonsäureester und Phosphazene, wobei auch Mischungen von mehreren Verbindungen ausgewählt aus einer oder verschiedenen dieser Gruppen als Flammschutzmittel zum Einsatz kommen können.

Bevorzugte mono- und oligomere Phosphor- bzw. Phosphonsäureester sind Phosphorverbindungen der allgemeinen Formel (4)

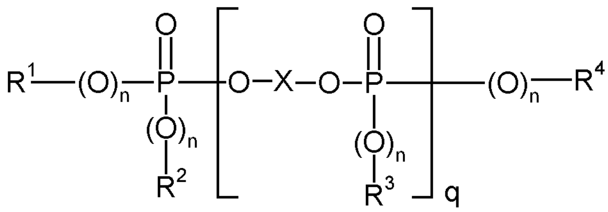

(4)

worin

$R^1$, $R^2$, $R^3$ und $R^4$, unabhängig voneinander jeweils gegebenenfalls halogeniertes $C_1$ bis $C_8$-Alkyl, jeweils gegebenenfalls durch Alkyl, vorzugsweise $C_1$ bis $C_4$-Alkyl, und/oder Halogen, vorzugsweise Chlor, Brom, substituiertes $C_5$ bis $C_6$-Cycloalkyl, $C_6$ bis $C_{20}$-Aryl oder $C_7$ bis $C_{12}$-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen $R^1$, $R^2$, $R^3$ und $R^4$ unabhängig voneinander für $C_1$ bis $C_4$-Alkyl, Phenyl, Naphthyl oder Phenyl-

$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$ bis $C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (4) bedeutet bevorzugt einen ein- oder mehrkernigen aromatischen Rest mit 6 bis 30 C-Atomen. Dieser leitet sich bevorzugt von Diphenolen ab.
n in der Formel (4) kann, unabhängig voneinander, 0 oder 1 sein, vorzugsweise ist n gleich 1.
q steht für Werte von 0 bis 30. Bei Einsatz von Mischungen verschiedener Komponenten der Formel (4) können Mischungen vorzugsweise zahlengemittelte q-Werte von 0,3 bis 10, besonders bevorzugt 0,5 bis 10, insbesondere 1,05 bis 1,4, am meisten bevorzugt 1,05 bis 1,2 verwendet werden.
X steht besonders bevorzugt für

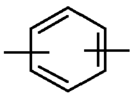 , 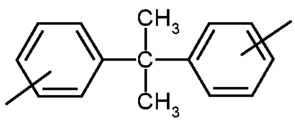 , 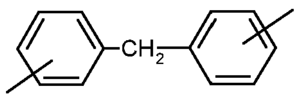 ,

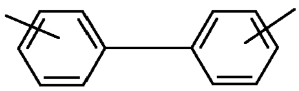

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente C können Monophosphate (q=O), Oligophosphate (q=1-30) oder Mischungen aus Mono- und Oligophosphaten eingesetzt werden.

Monophosphorverbindungen der Formel (1) sind insbesondere Tributylphosphat, Tris-(2-chlorethyl)-phosphat, Tris-(2,3-dibromprobyl)-phosphat, Tri-(2-ethylhexylphosphat), Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Eine besonders bevorzugte Phosphorverbindung gemäß Komponente C ist Bisphenol-A basierendes Oligophosphat gemäß Formel (5).

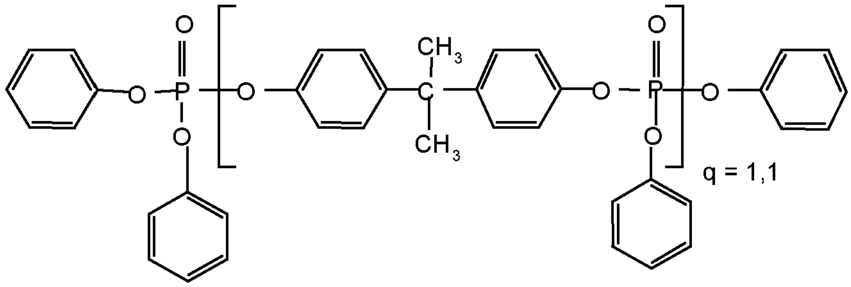

(5)

Die Phosphorverbindungen gemäß Formel (4) sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphazene sind Verbindungen der Formeln (6) und (7)

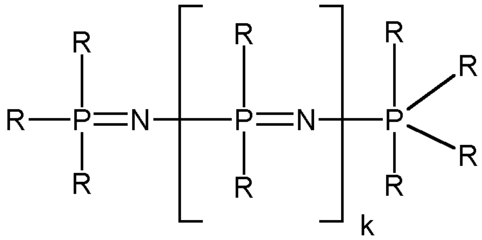

(6),

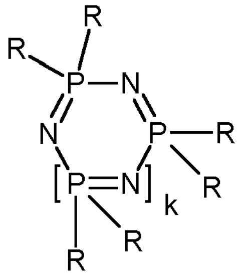

(7),

worin

R jeweils gleich oder verschieden ist und für Amino, jeweils gegebenenfalls halogeniertes, vorzugsweise mit Fluor halogeniertes $C_1$ bis $C_8$-Alkyl, oder $C_1$ bis $C_8$-Alkoxy, jeweils gegebenenfalls durch Alkyl, vorzugsweise $C_1$ bis $C_4$-Alkyl, und/oder Halogen, vorzugsweise Chlor und/oder Brom, substituiertes $C_5$ bis $C_6$-Cycloalkyl, $C_6$ bis $C_{20}$-Aryl, vorzugsweise Phenyl oder Naphthyl, $C_6$ bis $C_{20}$-Aryloxy, vorzugsweise Phenoxy, Naphthyloxy, oder $C_7$ bis $C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Bevorzugt ist Phenoxyphosphazen.

Die Phosphazene können allein oder als Mischung eingesetzt werden. Der Rest R kann immer gleich sein oder 2 oder mehre Reste in den Formeln (6) und (7) können verschieden sein. Phosphazene und deren Herstellung sind beispielsweise in EP-A 728 811, DE-A 1 961668 und WO 97/40092 beschrieben.

Bevorzugt wird als Komponente C ein Flammschutzmittel gemäß Formel (4), besonders bevorzugt gemäß Formel (5) eingesetzt.

**Komponente D**

Als Komponente D können in der Zusammensetzung optional ein oder mehrere Vertreter ausgewählt aus der Gruppe bestehend aus Polymeradditiven und polymeren Blendpartnern enthalten sein.

Die Polymeradditive bzw. polymeren Blendpartner sind bevorzugt ausgewählt aus der Gruppe bestehend aus Antidrippingmitteln, Flammschutzsynergisten, Rauchinhibitoren, Gleit- und Entformungsmitteln, Nukleiermitteln, Antistatika, Leitfähigkeitsadditiven, Stabilisatoren, Fließfähigkeitspromotoren, Füll- und Verstärkungsstoffen, Phasenverträglichkeitsvermittlern, , weiteren von den Komponenten A und B verschiedenen polymeren Bestandteilen sowie Farbstoffen und Pigmenten.

In bevorzugter Ausführungsform wird als Komponente D mindestens ein Polymeradditiv ausgewählt aus der Gruppe bestehend aus Gleit- und Entformungsmitteln und Stabilisatoren eingesetzt.

In bevorzugter Ausführungsform wird als Stabilisator mindestens ein Vertreter ausgewählt aus der Gruppe bestehend aus sterisch gehinderten Phenolen, organischen Phosphiten, Phosphoriger Säure und organischen oder anorganischen Brönstedt-Säuren eingesetzt.

Als Gleit- und Entformungsmittel werden in bevorzugter Ausführungsform Fettsäureester, besonders bevorzugt Fettsäureester des Pentaerythrits oder Glycerins, eingesetzt.

Die Menge und die Art der Komponenten D muss selbstverständlich so ausgewählt werden, dass die Flammwidrigkeit und der CTI nicht signifikant verschlechtert werden.

**Herstellung des thermoplastischen Material aus der Zusammensetzung**

Aus der Zusammensetzung enthaltend die erfindungsgemäßen Komponenten A, B und C sowie optional D kann das thermoplastische Material M hergestellt werden.

Das thermoplastische Material M kann beispielsweise hergestellt werden, indem man die jeweiligen Bestandteile der Zusammensetzung in bekannter Weise vermischt und bei Temperaturen von bevorzugt 200°C bis 320°C, besonders bevorzugt bei 240°C bis 300°C, ganz besonders bevorzugt bei 260°C bis 290°C in üblichen Aggregaten wie beispielsweise Innenknetern, Extrudern und Doppelwellenschnecken schmelzcompoundiert und schmelzextrudiert.

Dieser Prozess wird im Rahmen dieser Anmeldung allgemein als Compoundieren bezeichnet.

Unter thermoplastischem Material M wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzung kann in bekannter Weise sowohl sukzessive als auch simultan erfolgen, und zwar sowohl bei etwa 20 °C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

**Herstellen des erfindungsgemäßen E/E-Bauteils**

Ein erfindungsgemäßes Bauteil kann beispielsweise im Spritzguss mit Überspritzen von metallischen Leiterbahnen hergestellt werden. Dabei werden metallische Leiterbahnen vorkonfektioniert in der Kavität des Spritzgusswerkzeugs fixiert. Die Leiterbahnen werden nach Schließen des Werkzeugs unter hohem Druck mit Polymerschmelze überflutet, wodurch diese im erkalteten Zustand einen Verbund erzeugen. Nach dem Erstarren und Entformen kann das fertige Bauteil genutzt werden.

Eine Alternative ist der integrierte Kunststoff-Metall-Spritzguss (IKMS). Dabei wird das fertige Bauteil in zwei Schritten hergestellt. Im ersten Schritt wird die Kunststoffkomponente mit den später zu füllenden Leiterbahnen hergestellt. Anschließend wird das fertige Kunststoffbauteil in eine zweite Kavität umgesetzt und mit Lot gefüllt, dieses stellt im erstarrten Zustand die Leiterbahnen dar.

Eine weitere Alternative ist das nachträgliche Verbinden eines Spritzgussbauteils mit den Leiterbahnen, d.h. die Kunststoffkomponente wird im Spritzguss hergestellt und in einem weiteren Schritt mit dem Leiter zusammengebaut. Dabei kann die spritzgegossene Komponente über einen weiteren Energieeintrag im Zusammenbau verbunden werden. Dafür gibt es mehrere Methoden, so kann der metallische Leiter stark erhitzt werden, so dass dieser in die Kunststoffkomponente hineingepresst werden kann. Man kann den Leiter aber auch direkt mittels Laserschweißen mit dem Kunststoffbauteil verbinden.

Bei dem Bauteil handelt es sich bevorzugt um ein Teil eines (Hoch-)Spannungsschalters, (Hoch-)Spannungswechselrichters, Relais, elektronischen Verbinders, elektrischen Verbinders, Schutzschalters, einer Photovoltaikanlage, eines elektrischen Motors, eines Kühlkörpers, eines USB-Steckers, eines Ladegerätes oder Ladesteckers für elektrische Fahrzeuge, eines Elektroanschlusskastens, eines Smart Meter Gehäuses, eines Miniaturtrennschalters oder einer Stromsammelschiene. Es ist ebenso möglich, dass das Bauteil das gesamte Element ist und nicht nur ein Teil davon.

## Beispiele

**Komponente A-1:**

Lineares Polycarbonat auf Basis Bisphenol-A mit einem gewichtsgemittelten Molekulargewicht $M_w$ von 26000 g/mol (bestimmt durch GPC in Methylenchlorid mit Polycarbonat auf Basis von Bisphenol A als Standard).

**Komponente A-2:**

Lineares Polycarbonat auf Basis Bisphenol-A mit einem gewichtsgemittelten Molekulargewicht $M_w$ von 20000 g/mol (bestimmt durch GPC in Methylenchlorid mit Polycarbonat auf Basis von Bisphenol A als Standard).

**Komponente B-1**

Pfropfpolymerisat aus 23 Gew.-% Methylmethacrylat und 6 Gew.-% Styrol auf 71 Gew.-% Polybutadienkautschuk als Pfropfgrundlage, hergestellt durch Emulsionpolymerisation, Kane Ace™ M732, Kaneka, Japan

**Komponente B-2**

Pfropfpolymerisat von 40 Gew.-Teilen Methylmethacrylat auf 60 Gew.-Teilen Poly-n-butylacrylat-Kautschuk als Pfropfgrundlage (mittlerer Teilchendurchmesser d50 = 0,50µm), hergestellt durch Emulsionpolymerisation, Paraloid™ EXL-2300 (Dow, USA)

**Komponente B-3**

Pfropfpolymerisat von 43 Gew.-Teilen eines Copolymerisats aus Styrol und Acrylnitril im Gewichtsverhältnis von 73:27 auf 57 Gew.-Teilen eines teilchenförmigen vernetzten Polybutadienkautschuks als Pfropfgrundlage, hergestellt durch Emulsionspolymerisation.

**Komponente C**

Bisphenol-A basierendes Oligophosphat gemäß folgender Struktur (Chemtura Manufacturing UK Limited)

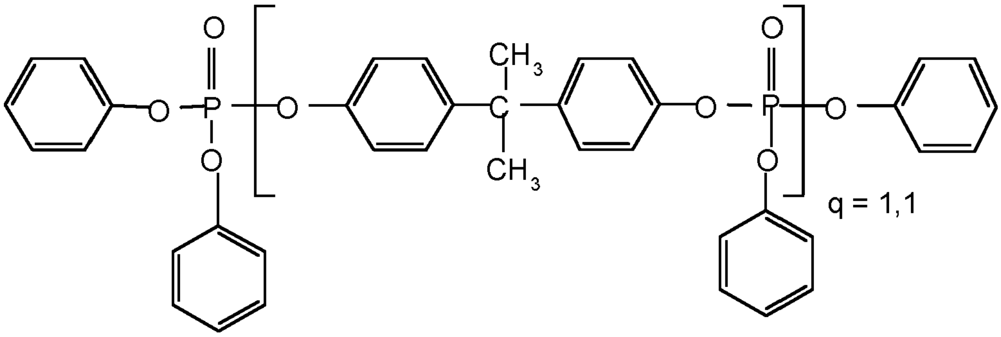

q = 1,1

**Komponente D-1**

Pentaerythrittetrastearat, Loxiol™ P 861/3.5 Special (Emery Oleochemicals GmbH, Düsseldorf, Deutschland).

**Komponente D-2**

Irganox™ B900 (Gemisch aus 80% Irgafos™ 168 (Tris(2,4-di-tert-butyl-phenyl)-phosphit) und 20% Irganox™ 1076 (2,6-Di-tert-butyl-4-(octadecanoxycarbonylethyl)-phenol); BASF (Ludwigshafen, Deutschland).

**Komponente D-3**

ADS5000: Polytetrafluoroethylen (PTFE) Präparat der Firma IRPC Public Company Limited, Thailand bestehend aus 50 Gew.-% PTFE enthalten in einer SAN-Copolymermatrix.

**Herstellung und Prüfung der Formmassen aus den Zusammensetzungen**

Das Mischen der Komponenten erfolgte auf einem Zweiwellenextruder ZSK-26 Mc18 der Fa. Coperion bei einer Massetemperatur von 250 °C - 280 °C. Die Formkörper wurden bei einer Massetemperatur von 260 °C und einer Werkzeugtemperatur von 70 °C auf einer Spritzgießmaschine Typ Arburg 270 E hergestellt.

Die IZOD-Kerbschlagzähigkeit wurde bestimmt bei Raumtemperatur an Prüfstäben der Dimension von 80 mm x 10 mm x 4 mm gemäß ISO 180/1A (Version von 2019).

Die Vicat-Erweichungstemperatur wurde gemessen gemäß DIN ISO 306 (Verfahren B mit 50 N Belastung und einer Heizrate von 120 K/h, Version von 2013) an einem einseitig angespritzten Prüfstab der Dimension 80x10x4 mm.

Die Flammwidrigkeit wurde gemäß UL94V an Stäben der Abmessung 127 x 12,7 x 1,5 mm beurteilt.

Die Kriechstromfestigkeit ("comparative tracking index", CTI) wurde für die hier beschriebenen Zusammensetzungen nach der Schnellprüfmethode in Anlehnung an die IEC 60112:2009 geprüft. Hierzu wurde eine 0,1%-ige Ammoniumchlorid Prüflösung (395 Ohm*cm Widerstand) tropfenweise zwischen zwei mit einem Abstand von 4 mm benachbarten Elektroden auf die Oberfläche von Prüfkörpern der Maße 60 mm x 40 mm x 4 mm im zeitlichen Abstand von 30 s appliziert. Zwischen den Elektroden lag eine Prüfspannung an, die im Verlauf des Tests variiert wurde. Der erste Prüfkörper wurde bei einer Startspannung von 300 V bzw. 350 V getestet. Es wurden insgesamt maximal 50 Tropfen (ein

Tropfen alle 30 s) pro Spannung appliziert, so lange kein Kriechstrom > 0,5 A über 2 s auftrat oder die Probe gebrannt hat. Nach 50 Tropfen wurde die Spannung um 50 V erhöht und ein neuer Prüfkörper bei dieser höheren Spannung, gemäß dem zuvor beschriebenen Vorgehen, getestet. Dieser Prozess wurde so lange fortgesetzt, bis entweder 600 V erreicht waren oder ein Kriechstrom bzw. Brand auftrat. Sollte es bereits bei weniger als 50 Tropfen zu einem der zuvor genannten Effekte gekommen sein, wurde die Spannung um 25 V reduziert und ein neuer Prüfkörper bei dieser niedrigeren Spannung getestet. Die Spannung wurde so lange reduziert, bis der Test mit 50 Tropfen ohne Kriechstrom oder Brand bestanden wurde. Mit diesem Prozedere wurde also die maximal mögliche Spannung ermittelt, bei der eine Zusammensetzung 50 Tropfen der Prüflösung ohne Auftreten eines Kriechstroms widerstehen konnte. Abschließend wurden bei der ermittelten Maximalspannung zur Bestätigung vier weitere Prüfkörper mit jeweils 50 Tropfen getestet. Dieser bestätigte Wert wird in den Beispielen als CTI angegeben. Ein 100 Tropfen-Wert wurde nicht ermittelt, daher "Schnellprüfmethode in Anlehnung" an genannte Norm.

Der PTI ("proof tracking index") wurde in Anlehnung - modifiziert wie nachfolgend beschrieben - an die IEC 60112:2009 geprüft. Hierzu wurde eine 0,1%-ige Ammoniumchlorid-Prüflösung (395 Ohm*cm Widerstand) tropfenweise zwischen zwei mit einem Abstand von 4 mm benachbarten Elektroden auf die Oberfläche von Prüfkörpern der Maße 60 mm x 40 mm x 4 mm im zeitlichen Abstand von 30 s appliziert. Im Gegensatz zur CTI-Prüfung lag bei der PTI-Prüfung zwischen den Elektroden eine feste Prüfspannung an und es wurden insgesamt 5 Prüfkörper bei der jeweiligen Spannung getestet. Es wurden insgesamt maximal 50 Tropfen (ein Tropfen alle 30 s) pro Prüfkörper appliziert, so lange kein Kriechstrom > 0,5 A über 2s auftrat oder die Probe gebrannt hat. Der Test gilt bei der jeweils vorgegebenen Spannung als bestanden, falls bei keinem der getesteten Prüfkörpern ein Kriechstrom > 0,5 A über 2 s auftrat oder die Probe gebrannt hat. Bei Auftreten eines Kriechstromes > 0,5 A über 2 s oder Brennen der Probe gilt der Test als nicht bestanden.

**Tabelle 1: Ergebnisse**

| **Komponenten [Gew.-%]** | **V1** | **V2** | **V3** | **V4** | **5** | **6** | **7** |
|---|---|---|---|---|---|---|---|
| A-1 | 79,2 | 77,2 | 75,9 | 73,2 | 69,2 | 65,2 | 61,2 |
| A-2 | 17,5 | 17,5 | 17,5 | 17,5 | 17,5 | 17,5 | 17,5 |
| B-1 | 1 | 2 | 2,6 | 4 | 6 | 8 | 10 |
| C | 1 | 2 | 2,7 | 4 | 6 | 8 | 10 |
| D-1 (PETS) | 0,4 | 0,4 | 0,4 | 0,4 | 0,4 | 0,4 | 0,4 |
| D-2 (Irganox B900) | 0,1 | 0,1 | 0,1 | 0,1 | 0,1 | 0,1 | 0,1 |
| D-3 (ADS 5000) | 0,8 | 0,8 | 0,8 | 0,8 | 0,8 | 0,8 | 0,8 |
| **Eigenschaften** | | | | | | | |
| Kriechstromfestigkeit CTI [V] | 600 | 600 | 600 | 600 | 600 | 600 | 600 |
| PTI 300 V | b | b | b | b | b | b | b |
| PTI 350 V | n.b. | b | b | b | b | b | b |
| Izod-Kerbschlagzähigkeit [kJ/m$^2$] | 14 | 19 | 47 | 49 | 50 | 48 | 45 |
| Flammwidrigkeit nach UL94 V bei 1,5 mm | V0 | n.b. | n.b. | n.b. | V0 | V0 | V1 |
| Vicat-Erweichungstemperatur [°C] | 138 | 134 | 132 | 128 | 121 | 115 | 108 |
| "b" bedeutet bestanden<br>"n.b." bedeutet nicht bestanden | | | | | | | |

Die Daten aus Tabelle 1 zeigen, dass nur mit den erfindungsgemäßen Zusammensetzungen 5, 6 und 7 sowohl eine hohe Kriechstromfestigkeit (CTI und PTI) und eine gute Flammwidrigkeit erreicht wird. Weiterhin erreichen die Izod-Schlagzähigkeit und die Vicat-Erweichungstemperatur die angestrebten Werte. Sind die Anteile der Komponenten B-1 und C zu gering, so wird die Flammwidrigkeit nicht erreicht, die Izod-Kerbschlagzähigkeit ist gering oder die Kriechstromfestigkeit ist unzureichend (V1, V2, V3 und V4).

**Tabelle 2: Ergebnisse**

| **Komponenten [Gew.-%]** | **V8** | **V9** | **V10** | **V11** | **12** | **13** | **14** |
|---|---|---|---|---|---|---|---|
| A-1 | 79,2 | 77,2 | 75,9 | 73,2 | 69,2 | 65,2 | 61,2 |

(fortgesetzt)

| Komponenten [Gew.-%] | V8 | V9 | V10 | V11 | 12 | 13 | 14 |
|---|---|---|---|---|---|---|---|
| A-2 | 17,5 | 17,5 | 17,5 | 17,5 | 17,5 | 17,5 | 17,5 |
| B-2 | 1 | 2 | 2,6 | 4 | 6 | 8 | 10 |
| C | 1 | 2 | 2,7 | 4 | 6 | 8 | 10 |
| D-1 (PETS) | 0,4 | 0,4 | 0,4 | 0,4 | 0,4 | 0,4 | 0,4 |
| D-2 (Irganox B900) | 0,1 | 0,1 | 0,1 | 0,1 | 0,1 | 0,1 | 0,1 |
| D-3 (ADS 5000) | 0,8 | 0,8 | 0,8 | 0,8 | 0,8 | 0,8 | 0,8 |
| **Eigenschaften** | | | | | | | |
| Kriechstromfestigkeit CTI [V] | 250 | 600 | 250 | 600 | 600 | 600 | 600 |
| PTI 300 V | n.b | n.b. | n.b. | b | b | b | b |
| PTI 350 V | n.b. | b | n.b. | n.b. | b | b | b |
| Izod- Kerbschlagzähigkeit [kJ/m$^2$] | 13 | 20 | 41 | 55 | 55 | 55 | 55 |
| Flammwidrigkeit nach UL94 V bei 1,5 mm | V0 | V0 | V0 | V2 | V2 | V1 | V0 |
| Vicat-Erweichungstemperatur [°C] | 138 | 135 | 132 | 128 | 121 | 114 | 108 |
| "b" bedeutet bestanden<br>"n.b." bedeutet nicht bestanden | | | | | | | |

Die Daten aus Tabelle 2 zeigen, dass auch mit der Komponente B-2 nur mit den erfindungsgemäßen Anteilen der Komponenten B-2 und C Zusammensetzungen mit den gewünschten Eigenschaften erreicht werden. Bei zu geringen Anteilen ist die Kriechstromfestigkeit (CTI und/oder PTI) nicht ausreichend (V8, V9, V10 und V11). Weiterhin erreicht die Izod-Kerbschlagzähigkeit nicht den angestrebten Mindestwert (V8 und V9).

**Tabelle 3: Ergebnisse**

| Komponenten [Gew.-%] | V15 | V16 | V17 | V18 | V19 | V20 |
|---|---|---|---|---|---|---|
| A-1 | 79,2 | 77,2 | 75,9 | 73,2 | 69,2 | 61,2 |
| A-2 | 17,5 | 17,5 | 17,5 | 17,5 | 17,5 | 17,5 |
| B-3 | 1 | 2 | 2,6 | 4 | 6 | 10 |
| C | 1 | 2 | 2,7 | 4 | 6 | 10 |
| D-1 (PETS) | 0,4 | 0,4 | 0,4 | 0,4 | 0,4 | 0,4 |
| D-2 (Irganox B900) | 0,1 | 0,1 | 0,1 | 0,1 | 0,1 | 0,1 |
| D-3 (ADS 5000) | 0,8 | 0,8 | 0,8 | 0,8 | 0,8 | 0,8 |
| **Eigenschaften** | | | | | | |
| Kriechstromfestigkeit CTI [V] | 600 | 600 | 300 | 600 | 600 | 300 |
| PTI 300 V | b | b | b | b | n.b. | b |
| PTI 350 V | n.b. | b | n.b. | n.b. | n.b. | n.b. |
| Izod- Kerbschlagzähigkeit [kJ/m$^2$] | 12 | 21 | 51 | 54 | 57 | 54 |
| Flammwidrigkeit nach UL94 V bei 1,5 mm | V0 | V0 | V0 | V0 | V0 | V0 |
| Vicat-Erweichungstemperatur [°C] | 138 | 134 | 132 | 128 | 121 | 108 |
| "b" bedeutet bestanden<br>"n.b." bedeutet nicht bestanden | | | | | | |

Die Daten aus Tabelle 3 zeigen, dass mit der Verwendung der nicht erfindungsgemäßen Komponente B-3 eine zufriedenstellende Kriechstromfestigkeit (PTI) mit Ausnahme von V16 nicht erreicht wird, auch nicht bei Anteilen, die mit

den Komponenten B-1 oder B-2 ausreichen. Bei geringer Menge der Komponente B-3 ist zudem die Izod-Kerbschlagzähigkeit sehr gering (V15 und V16).

## Patentansprüche

**1.** E/E-Bauteil umfassend

einen ersten elektrischen Leiter L1 und einen zweiten elektrischen Leiter L2 in einem ersten Abstand d1 und einem zweiten Abstand d2 zueinander,
welche über ein thermoplastisches Material M, das in direktem Kontakt mit dem ersten elektrischen Leiter und der zweiten elektrischen Leiter steht, verbunden sind,
wobei der Abstand d1 die kürzeste Strecke zwischen dem ersten elektrischen Leiter und dem zweiten elektrischen Leiter entlang der Oberfläche des thermoplastischen Materials M ist und
wobei der Abstand d2 die kürzeste Strecke zwischen dem ersten elektrischen Leiter und dem zweiten elektrischen Leiter durch die Luft ist
wobei d2 so ausgewählt ist, dass bei der jeweiligen Betriebsspannung U für das Bauteil ein Überschlag durch die Luft verhindert wird,
wobei d1 bei der nachfolgend aufgelisteten Betriebsspannung U folgende Werte hat:

$$d1(0V \leq U \leq 250V)\text{: 1,3 mm bis} < 2\text{,5 mm}$$

$$d1(250\ V < U \leq 500\ V)\text{: 2,5 mm bis} < 5\text{,0 mm}$$

$$d1(500\ V < U \leq 1000\ V)\text{: 5,0 mm bis} < 10\text{,0 mm}$$

und wobei das thermoplastische Material M folgende Komponenten umfasst:

A) mindestens ein aromatisches Polycarbonat, aromatischen Polyestercarbonats oder Mischungen daraus,
B) mindestens 5 Gew.-% mindestens eines kautschukmodifizierten Pfropfpolymers mit einer Pfropfgrundlage ausgewählt aus der Gruppe bestehend aus Acrylatkautschuken, Polybutadienkautschuken und Styrol-Butadien-Blockcopolymer-Kautschuken und einer Pfropfauflage, die frei ist von Struktureinheiten abgeleitet von Acrylnitril
C) mindestens 5 Gew.-% mindestens eines phosphorhaltiges Flammschutzmittels.

**2.** E/E-Bauteil gemäß Anspruch 1, wobei das thermoplastische Material M folgenden Komponenten umfasst:

A) 50 bis 85 Gew.-% mindestens eines aromatisches Polycarbonats, aromatischen Polyestercarbonats oder Mischungen daraus,
B) 5 bis 15 Gew.-% eines kautschukmodifizierten Pfropfpolymers mit einer Pfropfgrundlage ausgewählt aus der Gruppe bestehend aus Acrylatkautschuken, Polybutadienkautschuken und Styrol-Butadien-Blockcopolymer-Kautschuken
und einer Pfropfauflage, die frei ist von Struktureinheiten abgeleitet von Acrylnitril
C) 5 bis 15 Gew.-% mindestens eines phosphorhaltiges Flammschutzmittels.

**3.** E/E-Bauteil gemäß einem der vorhergehenden Ansprüche, wobei die Komponente A Bisphenol A basiertes Homopolycarbonat ist.

**4.** E/E-Bauteil gemäß einem der vorhergehenden Ansprüche, wobei die Komponente C ausgewählt ist aus der Gruppe bestehend aus mono- und oligomeren Phosphor- und Phosphonsäureester, Phosphazenen sowie Mischungen dieser Verbindungen.

**5.** E/E-Bauteil gemäß einem der vorhergehenden Ansprüche, wobei als Komponente C eine Verbindung der allgemeinen Formel (4) eingesetzt wird

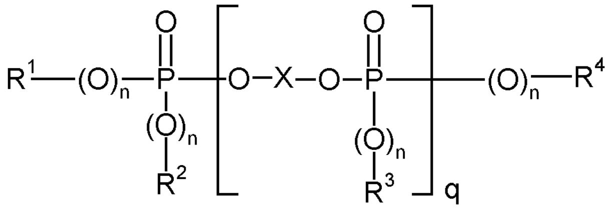

(4)

worin

$R^1$, $R^2$, $R^3$ und $R^4$, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

**6.** E/E-Bauteil gemäß einem der vorhergehenden Ansprüche, wobei das thermoplastische Material M weiterhin als Komponente D 0,1 bis 20 Gew.-% eines oder mehrerer Polymeradditive, Füll- und Verstärkungsstoffe, Farbstoffe, Pigmente und/oder von den Komponenten A und B verschiedene Polymere als Blendpartner umfasst.

**7.** E/E-Bauteil gemäß einem der vorhergehenden Ansprüche, wobei d1 bei den nachfolgend aufgelisteten Betriebsspannungen U folgende Werte aufweist :

$$d1(0V \leq U \leq 250V)\text{: } 1{,}3 \text{ bis} < 1{,}8 \text{ mm}$$

$$d1(250\ V < U \leq 500\ V)\text{: } 2{,}5 \text{ bis} < 3{,}6 \text{ mm}$$

$$d1(500\ V < U \leq 1000\ V)\text{: } 5{,}0 \text{ bis} < 7{,}1 \text{ mm}$$

**8.** E/E-Bauteil gemäß einem der vorhergehenden Ansprüche, wobei d2 ≥ 1,2 mm ist.

**9.** E/E-Bauteil gemäß einem der vorhergehenden Ansprüche, wobei d2 1,2 bis 10,0 mm beträgt.

**10.** E/E-Bauteil gemäß einer der vorhergehenden Ansprüche, wobei es sich um ein Teil eines (Hoch-)Spannungsschalters, (Hoch-)Spannungswechselrichters, Relais, elektronischen Verbinders, elektrischen Verbinders, Schutzschalters, einer Photovoltaikanlage, eines elektrischen Motors, eines Kühlkörpers, eines USB-Steckers, eines Ladegerätes oder Ladesteckers für elektrische Fahrzeuge, eines Elektroanschlusskastens, eines Smart Meter Gehäuses, eines Miniaturtrennschalters oder einer Stromsammelschiene handelt.

**11.** EE-Bauteil nach einem der vorhergehenden Ansprüche, wobei die das thermoplastische Material M einen CTI von 600 V, bestimmt in Anlehnung an IEC 60112:2009 wie im Beispielteil beschrieben, aufweist.

**12.** EE-Baugruppe, umfassend ein EE-Bauteil nach einem der vorhergehenden Ansprüche, wobei die EE-Baugruppe eine Schutzart IP6K9K nach ISO 20653:2013-02 aufweist.

**13.** EE-Baugruppe nach Anspruch 12, wobei die Betriebsspannung der EE-Baugruppe mindestens 400 V beträgt.

**14.** Verwendung von 5 bis 15 Gew.-% eines kautschukmodifizierten Pfropfpolymers mit einer Pfropfgrundlage ausgewählt aus der Gruppe bestehend aus Acrylatkautschuken, Polybutadienkautschuken und Styrol-Butadien-Blockcopolymer-Kautschuken und einer Pfropfauflage, die frei ist von Struktureinheiten abgeleitet von Acrylnitril und 5 bis 15 Gew.-% mindestens eines phosphorhaltiges Flammschutzmittels zur Verbesserung des CTI und der Flammwidrigkeit nach UL 94 V von aromatischen Polycarbonat-Zusammensetzungen oder aromatischen Polyestercarbonat-Zusammensetzungen.

**15.** Verwendung gemäß Anspruch 14, wobei ein CTI von 600 V bestimmt in Anlehnung an IEC 60112:2009 wie im Beispielteil beschrieben sowie eine UL 94 V2-Klassifizierung bei einer Probenkörperdicke von 1,5 mm von Polycarbonat-Zusammensetzungen enthaltend 50 bis 85 Gew.-% aromatisches Polycarbonat oder aromatisches Polyestercarbonat erzielt wird.

**Claims**

**1.** E/E component comprising

a first electrical conductor L1 and a second electrical conductor L2 at a first distance d1 and a second distance d2 to one another,
which are connected via a thermoplastic material M which is in direct contact with the first electrical conductor and the second electrical conductor,
wherein the distance d1 is the shortest distance between the first electrical conductor and the second electrical conductor along the surface of the thermoplastic material M and
wherein the distance d2 is the shortest distance between the first electrical conductor and the second electrical conductor through the air,
wherein d2 is selected in such a way that at the respective operating voltage U for the component a sparkover through the air is prevented,
wherein d1, at the operating voltage U listed below, has the following values:

$$d1(0\ V \leq U \leq 250\ V):\ 1.3\ mm\ to < 2.5\ mm$$

$$d1(250\ V < U \leq 500\ V):\ 2.5\ mm\ to < 5.0\ mm$$

$$d1(500\ V < U \leq 1000\ V):\ 5.0\ mm\ to < 10.0\ mm$$

and wherein the thermoplastic material M comprises the following components:

A) at least one aromatic polycarbonate, aromatic polyester carbonate or mixtures thereof,
B) at least 5% by weight of at least one rubber-modified graft polymer having a graft substrate selected from the group consisting of acrylate rubbers, polybutadiene rubbers and styrene-butadiene block copolymer rubbers and a graft superstrate free from structural units derived from acrylonitrile
C) at least 5% by weight of at least one phosphoruscontaining flame retardant.

**2.** E/E component according to Claim 1, wherein the thermoplastic material M comprises the following components:

A) 50% to 85% by weight of at least one aromatic polycarbonate, aromatic polyester carbonate or mixtures thereof,
B) 5% to 15% by weight of a rubber-modified graft polymer having a graft substrate selected from the group consisting of acrylate rubbers, polybutadiene rubbers and styrene-butadiene block copolymer rubbers
and a graft superstrate free from structural units derived from acrylonitrile
C) 5% to 15% by weight of at least one phosphoruscontaining flame retardant.

**3.** E/E component according to any of the preceding claims, wherein component A is bisphenol A-based homopolycarbonate.

**4.** E/E component according to any of the preceding claims, wherein component C is selected from the group consisting of mono- and oligomeric phosphoric and phosphonic esters, phosphazenes and mixtures of these compounds.

**5.** E/E component according to any of the preceding claims, wherein component C employed is a compound of general formula (4)

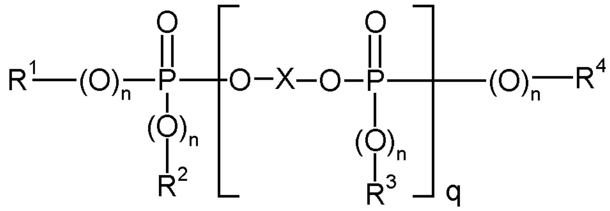

(4)

wherein

$R^1$, $R^2$, $R^3$ and $R^4$ are each independently optionally halogenated C1- to C8-alkyl, in each case optionally alkyl-substituted, preferably C1- to C4-alkyl-substituted, and/or halogen-substituted, preferably chlorine- or bromine-substituted, C5- to C6-cycloalkyl, C6- to C20-aryl or C7- to C12-aralkyl,
n is independently 0 or 1,
q is 0 to 30 and
X is a mono- or polycyclic aromatic radical having 6 to 30 carbon atoms, or a linear or branched aliphatic radical having 2 to 30 carbon atoms, which may be OH-substituted and may contain up to 8 ether bonds.

**6.** E/E component according to any of the preceding claims, wherein the thermoplastic material M further comprises as component D 0.1% to 20% by weight of one or more polymer additives, fillers and reinforcers, dyes, pigments and/or polymers distinct from components A and B as blend partners.

**7.** E/E component according to any of the preceding claims, wherein d1 exhibits the following values at the operating voltages U listed below:

$$d1(0\ V \leq U \leq 250\ V):\ 1.3\ to < 1.8\ mm$$

$$d1(250\ V < U \leq 500\ V):\ 2.5\ to < 3.6\ mm$$

$$d1(500\ V < U \leq 1000\ V):\ 5.0\ to < 7.1\ mm.$$

**8.** E/E component according to any of the preceding claims, wherein d2 ≥ 1.2 mm.

**9.** E/E component according to any of the preceding claims, wherein d2 is 1.2 to 10.0 mm.

**10.** E/E component according to any of the preceding claims, wherein said component is a part of a (high-)voltage switch, (high-)voltage inverter, relay, electronic connector, electrical connector, circuit breaker, a photovoltaic system, an electric motor, a heat sink, a USB plug, a charger or charging plug for electric vehicles, an electrical junction box, a smart meter housing, a miniature circuit breaker or a busbar.

**11.** EE component according to any of the preceding claims, wherein the thermoplastic material M has a CTI of 600 V determined based on IEC 60112:2009 as described in the examples section.

**12.** EE assembly comprising an EE component according to any of the preceding claims, wherein the EE assembly has an IP6K9K protection rating according to ISO 20653:2013-02.

**13.** EE assembly according to Claim 12, wherein the operating voltage of the EE assembly is at least 400 V.

**14.** Use of 5% to 15% by weight of a rubber-modified graft polymer having a graft substrate selected from the group consisting of acrylate rubbers, polybutadiene rubbers and styrene-butadiene block copolymer rubbers and a graft superstrate free from structural units derived from acrylonitrile
and 5% to 15% by weight of at least one phosphoruscontaining flame retardant for improving the CTI and the flame retardancy according to UL 94 V of aromatic polycarbonate compositions or aromatic polyester carbonate compositions.

**15.** Use according to Claim 14, wherein a CTI of 600 V determined based on IEC 60112:2009 as described in the

examples section and a UL 94 V2 classification at a test specimen thickness of 1.5 mm of polycarbonate compositions containing 50% to 85% by weight of aromatic polycarbonate or aromatic polyester carbonate is attained.

## Revendications

**1.** Élément E/E comprenant

un premier conducteur électrique L1 et un second conducteur électrique L2 à une première distance d1 et à une seconde distance d2 l'un de l'autre,
qui sont reliés par l'intermédiaire d'un matériau thermoplastique M qui est en contact direct avec le premier conducteur électrique et le second conducteur électrique,
la distance d1 étant le chemin le plus court entre le premier conducteur électrique et le second conducteur électrique le long de la surface du matériau thermoplastique M et
la distance d2 étant le chemin le plus court entre le premier conducteur électrique et le second conducteur électrique à travers l'air et
d2 étant choisi de telle sorte qu'à la tension de fonctionnement U respective pour l'élément, un contournement par l'air est évité,
d1 présentant les valeurs suivantes lors de la tension de fonctionnement U reprise dans la liste ci-dessous :

$$d1(0\ V \leq U \leq 250\ V)\ :\ 1,3\ mm\ \grave{a} < 2,5\ mm$$

$$d1(250\ V < U \leq 500\ V)\ :\ 2,5\ mm\ \grave{a} < 5,0\ mm$$

$$d1(500\ V < U \leq 1000\ V)\ :\ 5,0\ mm\ \grave{a} < 10,0\ mm$$

et le matériau thermoplastique M comprenant les composants suivants :

A) au moins un polycarbonate aromatique, un polyestercarbonate aromatique ou leurs mélanges,
B) au moins 5% en poids d'au moins un polymère greffé modifié par un caoutchouc présentant une base de greffage choisie dans le groupe constitué par les caoutchoucs d'acrylate, les caoutchoucs de polybutadiène et les caoutchoucs de copolymère séquencé de styrène-butadiène et un greffage qui est exempt de motifs structuraux dérivés d'acrylonitrile
C) au moins 5% en poids d'au moins un agent ignifuge contenant du phosphore.

**2.** Élément E/E selon la revendication 1, le matériau thermoplastique M comprenant les composants suivants :

A) 50 à 85% en poids d'au moins un polycarbonate aromatique, un polyestercarbonate aromatique ou de leurs mélanges,
B) 5 à 15% en poids d'un polymère greffé modifié par un caoutchouc présentant une base de greffage choisie dans le groupe constitué par les caoutchoucs d'acrylate, les caoutchoucs de polybutadiène et les caoutchoucs de copolymère séquencé de styrène-butadiène
et un greffage qui est exempt de motifs structuraux dérivés d'acrylonitrile
C) 5 à 15% en poids d'au moins un agent ignifuge contenant du phosphore.

**3.** Élément E/E selon l'une des revendications précédentes, le composant A étant un homopolycarbonate à base de bisphénol A.

**4.** Élément E/E selon l'une des revendications précédentes, le composant C étant choisi dans le groupe constitué par les esters monomères et oligomères de l'acide phosphorique et phosphonique, les phosphazènes ainsi que les mélanges de ces composés.

**5.** Élément E/E selon l'une des revendications précédentes, un composé de formule générale (4) étant utilisé comme composant C

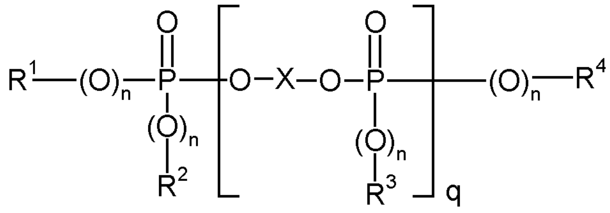

(4)

dans laquelle

$R^1$, $R^2$, $R^3$ et $R^4$ signifient, indépendamment les uns des autres, C1-C8-alkyle à chaque fois le cas échéant halogéné ; C5-C6-cycloalkyle, C6-C20-aryle ou C7-C12-aralkyle à chaque fois le cas échéant substitué par alkyle, de préférence par C1-C4-alkyle, et/ou par halogène, de préférence chlore ou brome,
n signifie, indépendamment, 0 ou 1
q signifie 0 à 30 et
x signifie un radical aromatique à un ou plusieurs noyaux comprenant 6 à 30 atomes de carbone ou un radical aliphatique linéaire ou ramifié comprenant 2 à 30 atomes de carbone, qui peut être substitué par OH et contenir jusqu'à 8 liaisons éther.

6. Élément E/E selon l'une des revendications précédentes, le matériau thermoplastique M comprenant en outre, comme composant D, 0,1 à 20% en poids d'un(e) ou de plusieurs additifs polymères, charges et agents de renforcement, colorants, pigments et/ou polymères différents des composants A et B en tant que partenaires de mélange.

7. Élément E/E selon l'une des revendications précédentes, d1 présentant les valeurs suivantes aux tensions de fonctionnement U reprises dans la liste ci-dessous :

d1(0 V ≤ U ≤ 250 V) : 1,3 mm à < 1,8 mm

d1(250 V < U ≤ 500 V) : 2,5 mm à < 3,6 mm

d1(500 V < U ≤ 1000 V) : 5,0 mm à < 7,1 mm

8. Élément E/E selon l'une des revendications précédentes, d2 étant ≥ 1,2 mm.

9. Élément E/E selon l'une des revendications précédentes, d2 représentant 1,2 à 10,0 mm.

10. Élément E/E selon l'une des revendications précédentes, l'élément étant une partie d'un interrupteur à (haute) tension, d'un onduleur à (haute) tension, d'un relais, d'un connecteur électronique, d'un connecteur électrique, d'un disjoncteur, d'une installation photovoltaïque, d'un moteur électrique, d'un corps de refroidissement, une prise USB, d'un chargeur ou d'un connecteur de charge pour véhicules électrique, d'un boîtier de connexion électrique, d'un boîtier de compteur intelligent, d'un coupe-circuit miniature ou d'une barre omnibus électrique.

11. Module E/E selon l'une des revendications précédentes, le matériau thermoplastique M présentant une valeur CTI de 600 V, déterminée selon la norme IEC 60112:2009 comme décrit dans la partie des exemples.

12. Module E/E, présentant un élément E/E selon l'une des revendications précédentes, le module E/E présentant une protection IP6K9K selon la norme ISO 20653:2013-02.

13. Module E/E selon la revendication 12, la tension de fonctionnement du module E/E étant d'au moins 400 V.

14. Utilisation de 5 à 15% en poids d'un polymère greffé modifié par un caoutchouc présentant une base de greffage choisie dans le groupe constitué par les caoutchoucs d'acrylate, les caoutchoucs de polybutadiène et les caoutchoucs de copolymère séquencé de styrène-butadiène et un greffage qui est exempt de motifs structuraux dérivés d'acrylonitrile
et de 5 à 15% en poids d'au moins un agent ignifuge contenant du phosphore pour l'amélioration de la valeur CTI et de

l'ininflammabilité selon la norme UL 94 V de compositions de polycarbonate aromatique ou de compositions de polyestercarbonate aromatique.

**15.** Utilisation selon la revendication 14, une valeur CTI de 600 V, déterminée selon la norme IEC 60112:2009 comme décrit dans la partie des exemples ainsi qu'une classification UL 94 V2, pour une épaisseur d'éprouvette de 1,5 mm, de compositions de polycarbonate contenant 50 à 85% en poids de polycarbonate aromatique ou de polyestercarbonate aromatique étant obtenues.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3560997 A2
- US 20120248384 A1
- US 2018187003 A1
- DE 1495626 A
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- EP 363608 A
- EP 640655 A
- EP 728811 A
- DE 1961668 A
- WO 9740092 A


### In der Beschreibung aufgeführte Nicht-Patentliteratur


- Glow wire ignition temperature (GWIT) and comparative tracking index (CTI) of glass fibre filled engineering polymers, blends and flame retarded formulations. *Polymer Degradation and Stability*, December 2011, vol. 96 (12), 2098-2103
- **W. SCHOLTAN** ; **H. LANGE**. *Kolloid, Z. und Z. Polymere*, 1972, vol. 250, 782-1796
- **M. HOFFMANN** ; **H. KRÖMER** ; **R. KUHN**. Polymeranalytik I und II. Georg Thieme-Verlag, 1977
- **ULLMANN**. Enzyklopädie der Technischen Chemie. 1980, vol. 19, 280
- Ullmanns Enzyklopädie der technischen Chemie. 1979, vol. 18, 301
- **HOUBEN-WEYL**. *Methoden der organischen Chemie*, vol. 12 (1), 43
- *Beilstein*, vol. 6, 177